# EUROPEAN PATENT SPECIFICATION

(11) **EP 0 983 716 B1**
(45) Date of publication and mention of the grant of the patent: **24.09.2003**
(21) Application number: 98116414.8
(22) Date of filing: 31.08.1998
(51) Int. Cl.: A01C 17/00, A01B 71/06, F16H 3/14

(54) **Transmission for transmitting rotary power from a drive shaft to at least one output shaft**
Getriebe für die Übertragung der Drehbewegung von einer Antriebswelle zu mindestens einer Ausgangswelle
Transmission pour transmettre la puissance rotative d'un arbre d'entraînement à, au moins, un arbre de sortie

(43) Date of publication of application: 08.03.2000
(73) Proprietor: A.P. Laursen A/S, DK-7171 Uldum (DK)
(72) Inventor: Laursen, Nils Jörn, 8722 Hedensted (DK)
(74) Representative: Roerboel, Leif

(56) References cited:
- DE-A- 3 917 210
- DE-C- 380 726
- FR-A- 2 312 184
- GB-A- 191 512 191
- JP-A- 61 021 001
- JP-A- 62 179 301
- PATENT ABSTRACTS OF JAPAN vol. 007, no. 279 (M-262), 13 December 1983 & JP 58 156750 A (SUZUE NOUKI SEISAKUSHO:KK), 17 September 1983

## Description

The present invention relates to a transmission for transmitting rotary power from a drive shaft, to be coupled to a power take-off shaft of a tractor or similar vehicle, to two output shafts rotating in opposite directions, which is suitable for use with centrifugal spreaders, with two oppositely rotating spreader discs, as set forth in the preamble of claim 1.

### BACKGROUND ART

A transmission of this kind is disclosed in DE-A-3 917 210. In this disclosure is described a transmission comprising a drive shaft to be connected to the power take-off of a tractor. The drive shaft is provided with a bevel gear wheel that Is in mesh with two further bevel gear wheels provided on two output shafts which extend substantially perpendicular to the drive shaft. With this transmission the rotary power of the tractor can be split in order to drive two oppositely rotating output shafts. The output shafts can be connected e.g. to the spreader discs of a centrifugal spreader. Many of these spreaders use spreader discs that rotate in opposite directions. In certain circumstances it Is necessary to reverse the direction of rotation of both of the discs in order to change the scatter pattern. Examples of the different scatter patterns realised by reversing the discs are also disclosed in DE-A-3 917 210. For this purpose an additional gear box has been provided between the power take-off of the tractor and the transmission in DE-A-3 917 210. The operator can with this additional gear box reverse the direction of rotation by exchanging the gear wheels. For one direction of rotation two meshing gear wheels are placed on the shafts of the gear box. In order to realise the reversed direction of rotation the meshing gear wheels have to be removed and another set of gear wheels is placed on said shaft together with a chain that links them in rotary connection. The procedure of changing the gear wheels is a time-consuming operation and is thus undesirable.

JP-58 156 750 discloses a gear mechanism providing the possibility of reversing the rotational direction of a single output shaft using two bevel gear wheels which are in engagement with a bevel gear wheel fixed on the output shaft. Selective engagement between the input shaft and each of the two bevel gear wheels provides opposite directions of rotation of the output shaft with the same direction of rotation of the input shaft. The provision of a reversal of rotation in this document requires the provision of several bevel gears and shafts, whereas the present invention provides this function using the already existing bevel gears in the drive system for the two oppositely rotating output shafts, only requiring one extra bevel gear and the relatively simple mechanism, all other components already present in order to provide the angular drive and opposite directions of rotation of the output shafts.

### DISCLOSURE OF THE INVENTION

On this background it is the object of the present invention to provide a transmission of the kind referred to initially with which it is possible to change the direction of rotation of the output shafts without the need for changing gear wheels and without the need for an additional gear box. This object is achieved in accordance with claim 1 by adding a second bevel gear wheel on the drive shaft and by providing locking means for selectively locking either the first bevel gear or the second bevel gear into rotary connection with the drive shaft.

The transmission may advantageously be provided with the locking means in the form of a bushing over the drive shaft that is in rotary connection with the drive shaft and that is slidable in the longitudinal direction of the drive shaft between the first and second bevel gears of the drive shaft, so as to engage either the first or second gear wheel.

The bushing may be provided with locking elements that are complementary with locking elements provided on the side surfaces of the first and second bevel gear wheels that face the bushing.

The transmission may have a neutral position for the bushing between the bevel gear wheels on the drive shaft.

The bushing may be actuated by a cam, which is connected to a shaft that can be operated by a lever which is either manually operated or operated by means of an actuator.

The transmission may be used for driving the spreader discs of a centrifugal spreader for spreading flowable material, such a fertilizer, seed or the like, over an earth surface.

Moreover, the invention relates to a centrifugal spreader including a transmission of the kind described above.

### BRIEF DESCRIPTION OF THE DRAWINGS

In the following detailed part of the present description, the invention will be explained in more detail with reference to the exemplary embodiments shown in the drawings, in which
Fig. 1 is a view on top of the transmission,
Fig. 2 is a view on the side of the transmission,
Fig. 3 is a perspective view on the bushing and a bevel gear
Fig. 4 is a detailed view on top of the transmission with the locking means in a first locking position,
Fig. 5 is the same view as Fig. 3 with the locking means in the neutral position, and
Fig. 6 is a view as in Fig. 3 and 4 with the locking means in a second locking position.

### DESCRIPTION OF THE PREFERRED EMBODIMENT

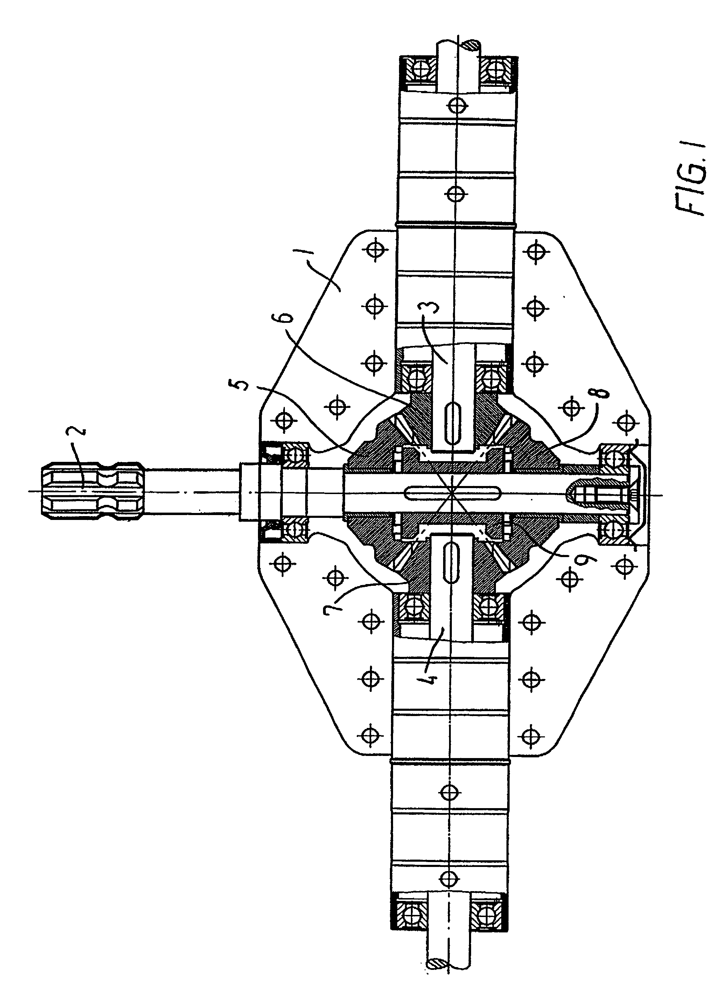

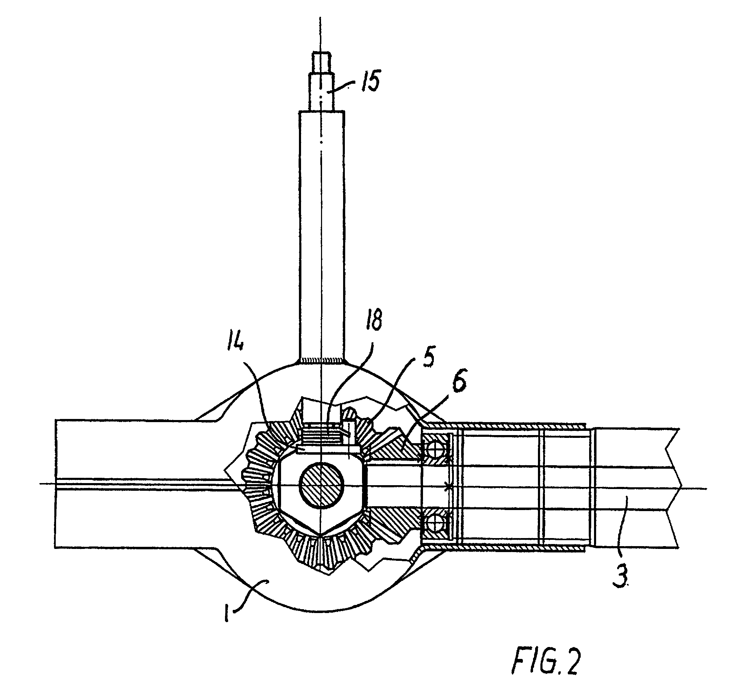

The transmission as shown in Fig. 1 and 2 comprises a housing 1, a drive shaft 2 joumaled in said housing. The drive shaft 2 is intended to be connected to the power take-off of a tractor or the like (not shown here) and defines for that purpose a coupling means at its end that extends out of the housing 1. The drive shaft 2 is provided with a first bevel gear wheel 5. Two output shafts 3,4 are joumaled in the housing 1 and their longitudinal axis extend substantially perpendicular to the longitudinal axis of the drive shaft 2. The output shaft 3 is provided with a bevel gear 6, and the output shaft 4 is provided with a bevel gear 7. Both bevel gears 6,7 are in mesh with the first bevel gear 5 on the output shaft 2. With this arrangement the output shafts 3,4 are driven in opposite rotational directions, but the direction of rotation of each individual output shaft 3,4 is always in the same directional relation with the direction of rotation of the drive shaft 2, i.e. when the direction of rotation of the drive shaft is not changed then the direction of rotation of the output shafts remains the same. Since the power take-off shaft of the tractor always rotates in the same direction it is necessary to provide a reversal mechanism in order to reverse the direction of rotation of the output shafts 3,4. For this purpose the drive shaft 2 is provided with a second bevel gear 8. This second bevel gear 8 is in mesh with both the bevel gear 6 on the output shaft 3 and the bevel gear 7 on the other output shaft 4. By changing the size of the bevel gear wheels 5,8 on the drive shaft 2 with respect to the size of the bevel gear wheels on the output shafts, the transmission ratio can be chosen to fit particular needs and circumstances.

According to a preferred embodiment the transmission is provided with two output shafts arranged such that their longitudinal axis fall together with their direction of rotation being opposite to one another.

The first and second bevel gears 5,8 can freewheel on the drive shaft 2. A locking means in the form of a bushing 9 allows selective rotary connection with the drive shaft 2.

The bushing 9 is located on the drive shaft between said first bevel gear 5 and said second bevel gear 8. The bushing 9 is in rotary connection with the drive shaft, but it is slidable in the longitudinal direction of the drive shaft. For this purpose rectangular parallel keyways can be provided in the bushing and/or the drive shaft which cooperate with corresponding keys.

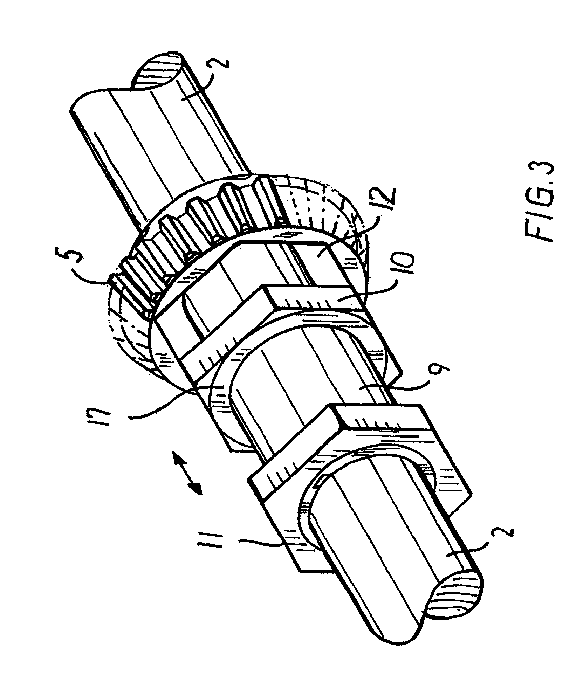

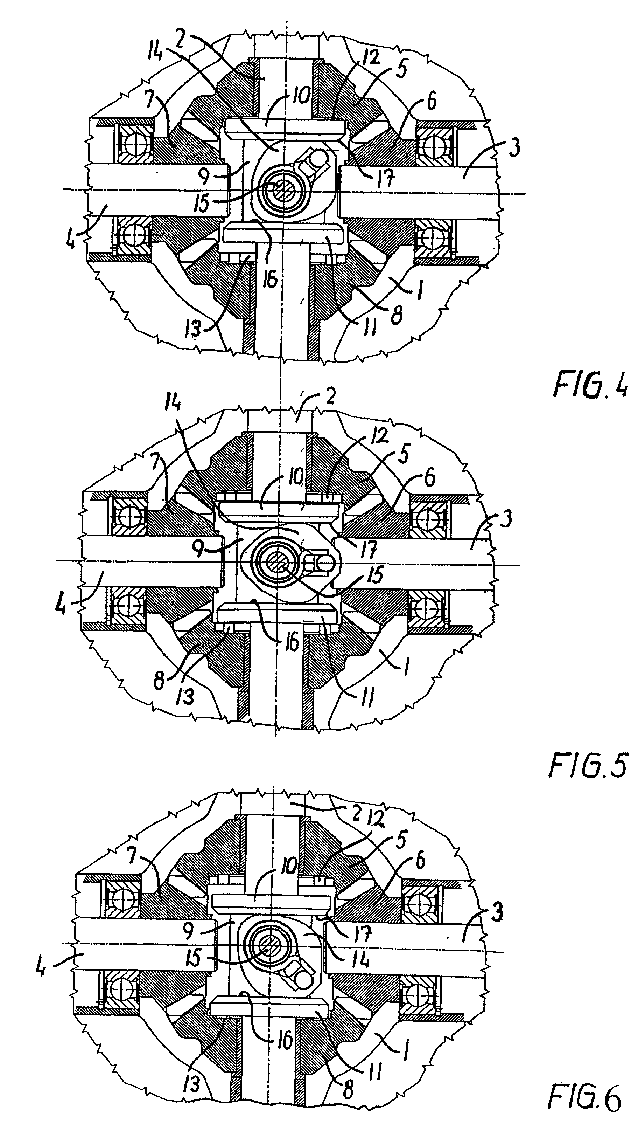

The bushing 9 is at its ends provided with locking elements 10,11 that are complementary with locking elements 12,13 provided on the side surfaces facing the bushing of the first and second bevel gears 5,8. The bushing 9 has such a length that in its neutral position, approximately in the middle between the first and second bevel gear wheels it does not engage either of these gear wheels, so that a neutral position is created in which none of the output shafts 3,4 is rotating (Fig. 5). The bushing 4 can be slid into engagement with either said first 6 or said second bevel gear wheel 7, whereby the complementary locking elements 10,11 of the bushing 9 engage the corresponding elements 12,13 on the side surface of the bevel gear wheel 5,8. The engagement of the locking element 10 on the first end of the bushing with the engagement with the locking element 12 on the side surface of the first bevel gear wheel 5 will result in a first direction of rotation of the output shafts 3,4 (Fig. 6), whereas the engagement of the locking element 11 on the second end of the bushing 9 with the locking element 13 on the second gear wheel 8 will result in a second and opposite direction of rotation for the output shafts 3,4 (Fig. 4). According to a preferred embodiment the complementary locking elements 10,11; 12,13 have a hexagonal shape (Fig. 3). Any other suitable shape may however be used, such as e.g. a pentagonal shape, or a toothed surface, or pins and holes, such modifications being easily conceived by the skilled person.

The bushing 9 is actuated by a cam 14 to slide its locking elements 10 or 11 into engagement with said first or second gear wheel 3,4, respectively. The bushing is provided with surfaces 16,17 for abutment with the cam profile. The cam 14 is connected to a shaft 15 which in turn can be operated by a lever that can be manually operated or can be operated by means of an actuator (not shown). The actuator can take any suitable form for positioning the bush 9, such as an electric actuator, a magnetic switch, a pneumatic or hydraulic cylinder or the like. The actuator may be provided with a remote control system, such as a Bowden Cable, (not shown). Various types of actuators could be used according to circumstances and will be easily conceived by the skilled person. The cam 14 has a profile that comprises two flat sections corresponding to the two positions of the bush in which the locking means are engaged. Flat sections may also be provided in the profile of the cam for the neutral position of the bush 9. These flat sections provide self-stable positions for the cam. The cam can be connected to the shaft 15 by a resilient member 18 in the form of a helical or torsion spring. The spring 18 dampens any vibrations or shocks originating in the transmission, so that the actuator or the operator is not subjected to these disturbances. Moreover, the spring 18 compensates for inaccuracies of the actuator, e.g. when the actuator attempts to move the cam 14 beyond the position in which the locking means are engaged.

Furthermore, the spring 18 provides the possibility of the activator or operator moving the shaft 15 past the position, in which engagement of the locking elements 10,12 or 11,13 should be initiated, but is not possible due to the mutual positions of these locking elements 10,12 or 11,13, which are not rotating during the change of rotational direction. Subsequent rotation of the drive shaft 2 will eventually bring the locking elements 10,12 or 11,13 into a mutual position, in which engagement is provided by the spring 18 moving the cam 14 and bushing 9.

The transmission can be used to drive the spreader discs of a centrifugal spreader (not shown) for spreading flowable material, such as fertilizer, seeds or the like, over an earth surface. For this purpose the output shafts 3,4 are connected to the spreader discs of such a centrifugal spreader. With this transmission it is possible to conveniently reverse the direction of rotation of the spreader discs. Such a centrifugal spreader comprises a frame, a container for storing the flowable material to be spread, and said at least two spreader discs. On the spreader discs there can be provided different types of spreader vanes. With the gear box according to the present invention it is possible to change the spreading pattern by reversing the rotation of such a spreader device without modifications to the spreader device or the transmission of the spreader device. A change in direction of rotation can be carried out by the operator without having to stop the tractor or similar vehicle or having to leave the latter. The operator has merely to activate the actuator of the lever of the shaft 15 in order to carry out the change in direction.

### LIST OF REFERENCE NUMERALS

- 1: Housing
- 2: Drive shaft
- 3: Output shaft
- 4: Output shaft
- 5: First bevel gear
- 6: Bevel gear on output shaft 3
- 7: Bevel gear on output shaft 4
- 8: Second bevel gear
- 9: Bushing
- 10: Locking element on first end of bushing
- 11: Locking element on second end of bushing
- 12: Locking element on side surface of first bevel gear wheel
- 13: Locking element on side surface of second bevel gear wheel
- 14: Cam
- 15: Shaft
- 16: Abutment surface
- 17: Abutment surface
- 18: Resilient member

## Claims

1. Transmission for transmitting rotary power from a drive shaft 2, to be coupled to a power take-off shaft of a tractor or similar vehicle, to two output shafts rotating in opposite directions, which is suitable for use with a centrifugal spreader with two oppositely rotating spreader discs comprising:
a housing (1), a drive shaft (2) provided with a first bevel gear wheel (5) on said drive shaft, two output shafts (3,4) extending substantially perpendicular to the drive shaft (2) a bevel gear wheel (6,7) on each output shaft (3,4), in mesh with said first bevel gear wheel (5), **characterised by** comprising a second bevel gear wheel (8) on said drive shaft (2) in mesh with the bevel gear wheels (6,7) of said two output shafts (3,4), locking means (9,10,11,12,13) for selectively locking either said first bevel gear wheel (5) or said second bevel gear wheel (8) into rotary connection with the drive shaft (2).

2. Transmission according to claim 1, **characterised in that** the longitudinal axes of the output shafts (3,4) are falling together.

3. Transmission according to any of claims 1-2, **characterised in that** the locking means (10,11) comprises a bushing (9) over the drive shaft (2) between the first and second bevel gear wheels (5,8), that is in rotary connection with the drive shaft (2).

4. Transmission according to any of claims 1-3, **characterised by** the bushing (9) being slidable in the longitudinal direction of the drive shaft (2), so as to engage either the first or the second bevel gear wheel (5,8).

5. Transmission according to any of claims 1-4, **characterised in that** complementary locking elements (10,11,12,13) are provided on the ends of the bushing (9) and the side surfaces facing the bushing of said first and second bevel gear wheels (5,8).

6. Transmission according to any of claims 1-5, **characterised in that** the complementary locking elements (10,11,12,13) have a hexagonal shape.

7. Transmission according to any of claims 3-6, **characterised in that** the bushing (9) has a neutral position between said first and second bevel gear wheels (5,8) in which it does not engage the first and second bevel gear wheels (5,8).

8. Transmission according to any of claims 3-7, **characterised in that** the bushing (9) is actuated by a cam (14) to slide it into engagement with said first or second bevel gear wheel (5,8), respectively.

9. Transmission according to any of claims 3-8, **characterised in that** the bushing (9) comprises at its ends abutment surfaces (16,17) for engaging said cam (14).

10. Transmission according to claim 8 or 9, **characterised in that** said cam (14) is connected to shaft (15) to which is connected a lever that is either operated manually or by means of an actuator, preferably by remote control.

11. Transmission according to any of claims 8-10, **characterised in that** the profile of the cam comprises one or two flat sections corresponding to the positions of the bush (9) in which the locking elements (10-13) are engaged.

12. Transmission according to any of claims 8-11, **characterised in that** the cam is connected to the shaft (15) through a resilient member (18).

13. Transmission according to claim 12, **characterised in that** the resilient member (18) is a torsion spring

14. Use of a transmission according to any of claims 1-13 to drive the spreader discs of a centrifugal spreader for spreading flowable materials, such as fertiliser, seeds or the like over an earth surface.

15. Centrifugal spreader for spreading flowable materials, such as fertiliser, seeds or the like over an earth surface comprising a transmission as defined in any of claims 1-13.

## Patentansprüche

1. Getriebe für die Übertragung der Drehbewegung von einer Antriebswelle 2, die mit einer Zapfwelle eines Traktors oder eines ähnlichen Fahrzeugs zu verbinden ist, zu zwei in entgegengesetzte Richtungen rotierende Ausgangswellen, das für die Verwendung mit einer Schleuderstreumaschine mit zwei entgegengesetzt rotierenden Streumaschinenscheiben geeignet ist, das aufweist:
ein Gehäuse (1), eine Antriebswelle (2), die mit einem ersten Kegelrad (5) auf der Antriebswelle versehen ist, zwei Ausgangswellen (3, 4), die sich im wesentlichen senkrecht zu der Antriebswelle (2) erstrecken, ein Kegelrad (6, 7) auf jeder Ausgangswelle (3, 4) im Eingriff mit dem ersten Kegelrad (5), **dadurch gekennzeichnet, daß** es ein zweites Kegelrad (8) auf der Antriebswelle (2) im Eingriff mit den Kegelrädern (6, 7) der zwei Ausgangswellen (3, 4) und Sperreinrichtungen (9, 10, 11, 12, 13) zum selektiven Sperren des ersten Kegelrads (5) oder des zweiten Kegelrads (8) in einer rotierenden Verbindung mit der Antriebswelle (2) aufweist.

2. Getriebe nach Anspruch 1, **dadurch gekennzeichnet, daß** die Längsachsen der Ausgangswellen (3, 4) zusammenfallen.

3. Getriebe nach einem der Ansprüche 1 bis 2, **dadurch gekennzeichnet, daß** die Sperreinrichtung (10, 11) zwischen den ersten und zweiten Kegelrädern (5, 8) eine Hülse (9) über der Antriebswelle (2) aufweist, die in einer rotierenden Verbindung mit der Antriebswelle (2) ist.

4. Getriebe nach einem der Ansprüche 1 bis 3, **dadurch gekennzeichnet, daß** die Hülse (9) in der Längsrichtung der Antriebswelle (2) verschiebbar ist, um entweder in das erste oder das zweite Kegelrad (5, 8) einzugreifen.

5. Getriebe nach einem der Ansprüche 1 bis 4, **dadurch gekennzeichnet, daß** auf den Enden der Hülse (9) und den der Hülse zugewandten seitlichen Oberflächen der ersten und zweiten Kegelräder (5, 8) komplementäre Sperrelemente (10, 11, 12, 13) vorgesehen sind.

6. Getriebe nach einem der Ansprüche 1 bis 5, **dadurch gekennzeichnet, daß** die komplementären Sperrelemente (10, 11, 12, 13) eine sechseckige Form haben.

7. Getriebe nach einem der Ansprüche 3 bis 6, **dadurch gekennzeichnet, daß** die Hülse (9) eine Leerlaufposition zwischen den ersten und zweiten Kegelrädern (5, 8) hat, in welcher sie nicht in die ersten und zweiten Kegelräder (5, 8) eingreift.

8. Getriebe nach einem der Ansprüche 3 bis 7, **dadurch gekennzeichnet, daß** die Hülse (9) durch eine Nocke (14) betätigt wird, um jeweils in den Eingriff mit dem ersten oder zweiten Kegelrad (5, 8) zu gleiten.

9. Getriebe nach einem der Ansprüche 3 bis 8, **dadurch gekennzeichnet, daß** die Hülse (9) an ihren Enden Anschlagoberflächen (16, 17) zum Eingreifen in die Nocke (14) aufweist.

10. Getriebe nach Anspruch 8 oder 9, **dadurch gekennzeichnet, daß** die Nocke (14) mit der Welle (15) verbunden ist, mit der ein Hebel verbunden ist, der entweder manuell betätigt oder, bevorzugt mittels Fernsteuerung, mit Hilfe eines Aktuators betätigt wird.

11. Getriebe nach einem der Ansprüche 8 bis 10, **dadurch gekennzeichnet, daß** das Nockenprofil ein oder zwei flache Abschnitte aufweist, die den Positionen der Hülse (9) entsprechen, in die die Sperrelemente (10 - 13) eingreifen.

12. Getriebe nach einem der Ansprüche 8 bis 11, **dadurch gekennzeichnet, daß** die Nocke durch ein elastisches Element (18) mit der Welle (15) verbunden ist.

13. Getriebe nach Anspruch 12, **dadurch gekennzeichnet, daß** das elastische Element (18) eine Torsionsfeder ist.

14. Verwendung eines Getriebes nach einem der Ansprüche 1 bis 13, um die Streumaschinenscheiben einer Schleuderstreumaschine zum Streuen von fließfähigen Materialien, wie etwa Dünger, Saatgut oder ähnlichem, über eine Erdoberfläche anzutreiben.

15. Schleuderstreumaschine zum Streuen von fließfähigen Materialien, wie etwa Dünger, Saatgut oder ähnlichem über eine Erdoberfläche, welche ein Getriebe, wie in einem der Ansprüche 1 bis 13 definiert, aufweist.

## Revendications

1. Transmission destinée à transmettre de l'énergie de rotation d'un arbre menant (2) destiné à être couplé à un arbre de prise de force d'un tracteur ou véhicule analogue, à deux arbres de sortie qui tournent en sens opposés, d'une manière qui convient à l'utilisation avec un répartiteur centrifuge ayant deux disques répartiteurs tournant en sens opposés, comprenant :
un boîtier (1), un arbre menant (2) ayant une première roue à pignon conique (5) sur l'arbre menant, deux arbres de sortie (3, 4) s'étendant en direction pratiquement perpendiculaire à l'arbre menant (2), et une roue à pignon conique (6, 7) sur chaque arbre de sortie (3, 4) en prise avec la première roue à pignon conique (5), **caractérisé en ce qu'**elle comprend une seconde roue à pignon conique (8) montée sur l'arbre menant (2) en prise avec les roues à pignon conique (6, 7) des deux arbres de sortie (3, 4), et un dispositif (9, 10, 11, 12, 13) de blocage destiné à bloquer sélectivement la première roue (5) ou la seconde roue (8) à pignon conique en coopération par rotation avec l'arbre menant (2).

2. Transmission selon la revendication 1, **caractérisée en ce que** les axes longitudinaux des arbres de sortie (3, 4) se rejoignent.

3. Transmission selon l'une des revendications 1 et 2, **caractérisée en ce que** le dispositif de blocage (10, 11) comprend un coussinet (9) placé sur l'arbre menant (2) entre les première et seconde roues à pignon conique (5, 8), c'est-à-dire sous forme raccordée en rotation à l'arbre menant (2).

4. Transmission selon l'une quelconque des revendications 1 à 3, **caractérisée en ce que** le coussinet (9) peut coulisser dans la direction longitudinale de l'arbre menant (2) afin qu'il coopère avec la première ou la seconde roue à pignon conique (5, 8).

5. Transmission selon l'une quelconque des revendications 1 à 4, **caractérisée en ce que** des éléments complémentaires de blocage (10, 11, 12, 13) sont placés aux extrémités du coussinet (9) et aux surfaces latérales tournées vers le coussinet des première et seconde roues à pignon conique (5, 8).

6. Transmission selon l'une quelconque des revendications 1 à 5, **caractérisée en ce que** les éléments complémentaires de blocage (10, 11, 12, 13) ont une forme hexagonale.

7. Transmission selon l'une quelconque des revendications 3 à 6, **caractérisée en ce que** le coussinet (9) a une position neutre entre les première et seconde roues à pignon conique (5, 8), dans laquelle il n'est pas en prise avec les première et seconde roues à pignon conique (5, 8).

8. Transmission selon l'une quelconque des revendications 3 à 7, **caractérisée en ce que** le coussinet (9) est commandé par une came (14) afin qu'il coulisse en prise avec la première ou la seconde roue à pignon conique (5, 8) respectivement.

9. Transmission selon l'une quelconque des revendications 3 à 8, **caractérisée en ce que** le coussinet (9) possède à ses extrémités des surfaces de butée (16, 17) destinées à coopérer avec la came (14).

10. Transmission selon la revendication 8 ou 9, **caractérisée en ce que** la came (14) est raccordée à un arbre (15) auquel est raccordé un levier qui est manoeuvré manuellement ou par un organe de manoeuvre, de préférence par commande à distance.

11. Transmission selon l'une quelconque des revendications 8 à 10, **caractérisée en ce que** le profil de la came comprend un ou deux tronçons plats correspondant aux positions du coussinet (9) dans lesquelles les éléments de blocage (10-13) sont en prise.

12. Transmission selon l'une quelconque des revendications 8 à 11, **caractérisée en ce que** la came est raccordée à l'arbre (15) par un organe élastique (18).

13. Transmission selon la revendication 12, **caractérisée en ce que** l'organe élastique (18) est un ressort de torsion.

14. Application d'une transmission selon l'une quelconque des revendications 1 à 13 à l'entraînement de disques d'épandage d'un épandeur centrifuge destiné à épandre des matières fluides, telles que des engrais, des céréales ou analogues à la surface de la terre.

15. Epandeur centrifuge destiné à épandre des matières fluides telles qu'un engrais, des céréales ou analogues à la surface de la terre, comprenant une transmission selon l'une quelconque des revendications 1 à 13.
